# EUROPEAN PATENT SPECIFICATION

(11) **EP 4 354 150 B1**
(45) Date of publication and mention of the grant of the patent: **06.05.2026**
(21) Application number: 22818186.3
(22) Date of filing: 14.04.2022
(51) Int. Cl.: G01N 35/10

(54) **AUTOMATIC ANALYSIS DEVICE**
AUTOMATISCHE ANALYSEVORRICHTUNG
DISPOSITIF D'ANALYSE AUTOMATIQUE

(30) Priority: 09.06.2021 JP 2021096731
(43) Date of publication of application: 17.04.2024
(73) Proprietor: HITACHI HIGH-TECH CORPORATION, Tokyo 105-6409 (JP)
(72) Inventor: HORIE Yosuke, Tokyo 100-8280 (JP); OCHI Manabu, Tokyo 100-8280 (JP); SAEGUSA Takashi, Tokyo 100-8280 (JP); KAWAHARA Tetsuji, Tokyo 105-6409 (JP); SUZUKI Yoichiro, Tokyo 105-6409 (JP); SAKATA Kenshiro, Tokyo 105-6409 (JP)
(74) Representative: MERH-IP Matias Erny Reichl Hoffmann Patentanwälte PartG mbB
(86) International application number: PCT/JP2022/017863
(87) International publication number: WO 2022/259765

(56) References cited:
- WO-A1-2019/207844
- JP-A- 2005 049 197
- JP-A- 2016 125 908
- JP-A- 2017 151 002
- JP-A- 2019 219 418
- JP-B2- 6 463 997
- US-A1- 2008 006 653
- US-A1- 2008 305 969

## Description

### Technical Field

The present invention relates to an automated analyzer that mixes a specimen and a reagent to conduct a component analysis.

### Background Art

The automated analyzer dispenses a specimen (sample) and a reagent in a small container (reaction cell), mixes them together, and analyzes components of the sample. Because the automated analyzer dispenses the sample and reagent by repeatedly using the same nozzle, the nozzle is replaced with new one in every half year or one year, from the viewpoint of maintaining dispensing accuracy. The automated analyzer, which uses a slender nozzle whose front end is small in diameter, causes the nozzle to suck the sample held in a sample tube and the reagent held in a reagent container and deliver the sample and reagent to the reaction cell, and cleans the front end of the nozzle in a cleaning tank. The nozzle is inserted into the sample tube of a slender shape, the reagent container having a narrow opening for the purpose of preventing evaporation of the reagent, the reaction cell that is a small container, and the cleaning tank having a cleaning hole allowing the nozzle to pass therethrough. These containers and cleaning tank each have an opening (hole) through which the nozzle passes, and this opening is small. When the nozzle is inserted into these containers and cleaning tank, therefore, the position of the nozzle needs to be aligned with the position of the opening through which the nozzle passes.

Conventionally, the position of the nozzle and the position of the opening through which the nozzle passes are adjusted by a skilled operator in order to prevent a drop in dispensing accuracy and scattering of a cleaning solution that are caused by a positional shift in the horizontal direction. In addition, every time the nozzle is replaced with a new nozzle, the horizontal position of the new nozzle needs to be adjusted because different nozzles have their respective centers of the nozzle front ends at different positions due to different degrees of warping resulting from manufacturing variations.

PTL 1 discloses an adjustment system for an automated analyzer which adjustment system can suppress a difference in adjustment quality that arises between a skilled operator and an unskilled operator. This adjustment system includes an imaging device (camera) that takes an image of an adjustment target object, and acquires information indicating a current position of the adjustment target object (an arm having a nozzle), based on the image taken by the imaging device.

To adjust the position of the nozzle using the imaging device, position coordinates of the front end of the nozzle and position coordinates of the opening through which the nozzle passes need to be extracted. A sample nozzle has stop positions at the sample tube, the reaction cell, and the cleaning tank, respectively, and at these stop positions, the nozzle sucks/delivers the sample and is cleaned. A reagent nozzle has stop positions at the reagent container, the reaction cell, and the cleaning tank, respectively, and at these stop positions, the nozzle sucks/delivers the reagent and is cleaned. It is required at each stop position that the position of the nozzle be aligned highly accurately with the opening of the container or cleaning tank, the opening allowing the nozzle to pass therethrough (the opening is hereinafter referred to as "adjustment target").
PTL 2 discloses a nozzle tip position measuring device that measures the position of a nozzle tip of a spotting device that drops a minute amount of liquid onto a substrate such as a glass plate.
PTL 3 discloses an ink jet device and a method for producing a biological assay substrate by releasing a plurality of substances onto the substrate.

### Citation List

### Patent Literature

PTL 1: WO 2013/122013 A
PTL 2: JP 2005049197 A
PTL 3: US 2008305969 A1

### Summary of Invention

### Technical Problem

To efficiently adjust the position of the nozzle in the horizontal direction at a plurality of stop positions of the nozzle, it is preferable that an arm having the nozzle be provided with an imaging device and that a positional shift between the nozzle and the adjustment target be detected, using an image captured by the imaging device. However, the image captured by the imaging device disposed on the arm contains not only the image of the nozzle but also an image of the adjustment target present at the same imaging distance at which the nozzle is present. When the front end of the nozzle is detected from a taken image of the front end of the nozzle, if an image of the adjustment target is included in the image, especially, if an image of a part with large contrast changes or irregularities is present at the back of the front end of the nozzle, such an extra image affects image processing, making it difficult to extract coordinates of the front end of the nozzle highly accurately by image processing. When the adjustment target is detected from an image of the adjustment target, on the other hand, if the nozzle overlaps the opening of the adjustment target, it makes detecting the center of the opening difficult.

An object of the present invention is to provide an automated analyzer that can highly accurately detect the position of a front end of a nozzle for dispensing, thus being able to highly accurately adjust the position of the nozzle.

### Solution to Problem

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. An automated analyzer according to the present invention includes: a dispensing mechanism including a nozzle that dispenses a reagent or a specimen and a dispensing arm that moves the nozzle; a cleaning tank for cleaning the nozzle; and an automated analyzer control unit that adjusts a position of the nozzle. The automated analyzer executes an analysis process of analyzing a mixed liquid of the reagent and the specimen, the mixed liquid being held in a reaction cell. At the dispensing mechanism, a stop position of the nozzle is set, the stop position being a position at which the nozzle stops moving in the analysis process. The dispensing mechanism includes an imaging device disposed on the dispensing arm. The automated analyzer control unit moves the nozzle to an imaging position
of the nozzle, and takes an image of the nozzle, using the imaging device, at the imaging position. The imaging position is a position to which the nozzle is allowed to move and is a position different from the stop position.

### Advantageous Effects of Invention

The present invention can provide an automated analyzer that can highly accurately detect the position of a front end of a nozzle for dispensing, thus being able to highly accurately adjust the position of the nozzle.

### Brief Description of Drawings

[FIG. 1] FIG. 1 depicts a configuration of an automated analyzer according to an embodiment of the present invention.
[FIG. 2A] FIG. 2A depicts a dispensing mechanism included in the automated analyzer according to the embodiment, showing a reagent dispensing mechanism including an attachable/detachable imaging device.
[FIG. 2B] FIG. 2B depicts a dispensing mechanism included in the automated analyzer according to the embodiment, showing a sample dispensing mechanism including an attachable/detachable imaging device.
[FIG. 2C] FIG. 2C depicts a dispensing mechanism included in the automated analyzer according to the embodiment, showing a reagent dispensing mechanism including a built-in imaging device.
[FIG. 2D] FIG. 2D depicts a dispensing mechanism included in the automated analyzer according to the embodiment, showing a sample dispensing mechanism including a built-in imaging device.
[FIG. 3A] FIG. 3A depicts an example of an image of a reagent nozzle that is located above a cleaning hole, the image being taken by the imaging device of the automated analyzer according to the present embodiment.
[FIG. 3B] FIG. 3B depicts an example of an image of the reagent nozzle that is taken at a position at which the back of a front end of the reagent nozzle is a blank background, the image being taken by the imaging device of the automated analyzer according to the present embodiment.
[FIG. 3C] FIG. 3C depicts an example of an image of a cleaning hole that is taken after the reagent nozzle is removed from the dispensing arm, the image being taken by the imaging device of the automated analyzer according to the embodiment.
[FIG. 3D] FIG. 3D depicts an example of an image of the cleaning hole that is taken after the reagent nozzle is moved to a position at which the reagent nozzle and the cleaning hole do not overlap, the image being taken by the imaging device of the automated analyzer according to the embodiment.
[FIG. 4] FIG. 4 depicts an example of stop positions of the reagent nozzle and the sample nozzle on a horizontal plane in the automated analyzer according to the embodiment.
[FIG. 5A] FIG. 5A depicts an example in which the position of the reagent nozzle is adjusted near an imaging position of the reagent nozzle and a reagent cleaning position, showing an example of the imaging position, the cleaning hole, and an imaging range of a camera that are on a horizontal plane.
[FIG. 5B] FIG. 5B depicts an example in which the position of the reagent nozzle is adjusted near the imaging position of the reagent nozzle and the reagent nozzle cleaning position, showing a cross-section taken along an A-A line of FIG. 5A.
[FIG. 5C] FIG. 5C depicts an example in which the position of the reagent nozzle is adjusted near an imaging position of the reagent nozzle and a reagent nozzle cleaning position, showing an example of the reagent nozzle cleaning position, the cleaning hole, and the imaging range of the camera that are on a horizontal plane.
[FIG. 5D] FIG. 5D depicts an example in which the position of the reagent nozzle is adjusted near the imaging position of the reagent nozzle and the reagent nozzle cleaning position, showing a cross-section taken along a B-B line of FIG. 5C.
[FIG. 6] FIG. 6 depicts a flow of processes that an automated analyzer control unit of the automated analyzer according to the embodiment executes to adjusts the position of the nozzle.
[FIG. 7] FIG. 7 is a block diagram showing an example of a configuration of the automated analyzer control unit included in the automated analyzer according to the embodiment.

### Description of Embodiments

In the automated analyzer according to the present invention, a suction position at which a nozzle for dispensing sucks a reagent or a specimen, a delivery position at which the nozzle delivers the reagent or the specimen, and a cleaning position at which a front end of the nozzle is cleaned are set as stop positions of the nozzle, and an imaging position at which an image of the nozzle is taken by an imaging device is set as a position separated from these stop positions, at a position to which the nozzle can move. In the automated analyzer according to the present invention, because an image of the nozzle is taken at this imaging position, the position of the front end of the nozzle can be detected highly accurately. It is preferable that the imaging position of the nozzle be a position at which the background of the front end of the nozzle is a blank background (position at which the background has no irregularities and less contrast changes) in the taken image of the nozzle. Both the nozzle and the imaging device are disposed on a dispensing arm of a dispensing mechanism, and therefore the imaging device moves together with the nozzle.

In the automated analyzer according to the present invention, the nozzle is moved first to an imaging position of the nozzle, at which an image of the nozzle is taken to detect position coordinates of the front end of the nozzle. Subsequently, after the nozzle is moved to a position at which the nozzle and an imaging target (e.g., a reagent container, a specimen container, a reaction cell, or a cleaning tank) do not overlap in an image taken by the imaging device, an image of the imaging target is taken to detect position coordinates of the imaging target. Then, an amount of positional shift between the nozzle and the imaging target is determined from the position coordinates of the front end of the nozzle and the position coordinates of the imaging target, and the position of the nozzle in the horizontal direction is adjusted. By this adjustment of the position of the nozzle, the position of the center of the nozzle matches the position of the center of the imaging target. In this manner, when executing an analysis process of analyzing a mixed liquid of the reagent and the specimen, the automated analyzer according to the present invention can move the nozzle in such a way as to match the position of the center of the nozzle to the position of the center of the imaging target.

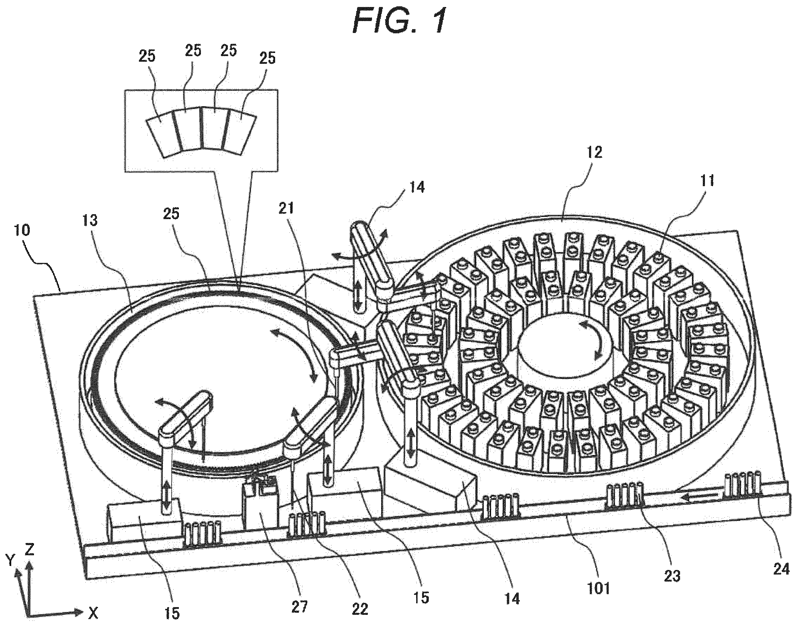

Hereinafter, the automated analyzer according to an embodiment of the present invention will be described with reference to FIGS. 1 to 7. In the following description, the specimen will be referred to also as a sample. An opening each of the reagent container, the specimen container, the reaction cell, and the cleaning tank has, the opening allowing the nozzle to pass therethrough, will be referred to as an "adjustment target".

### Embodiments

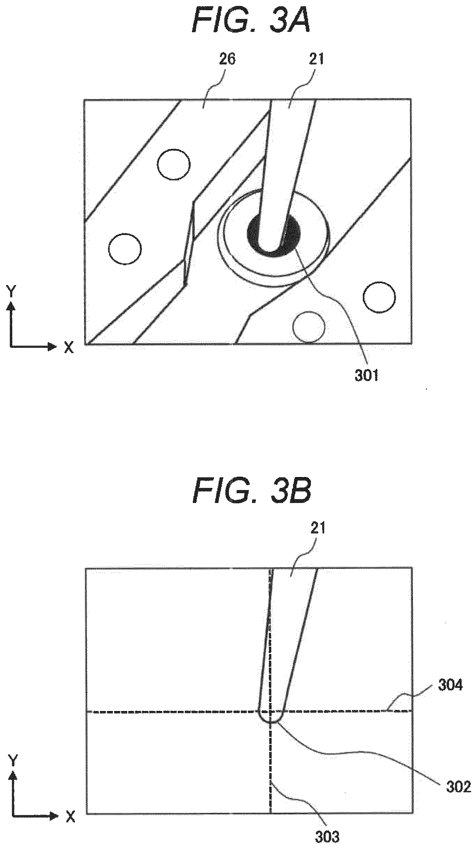

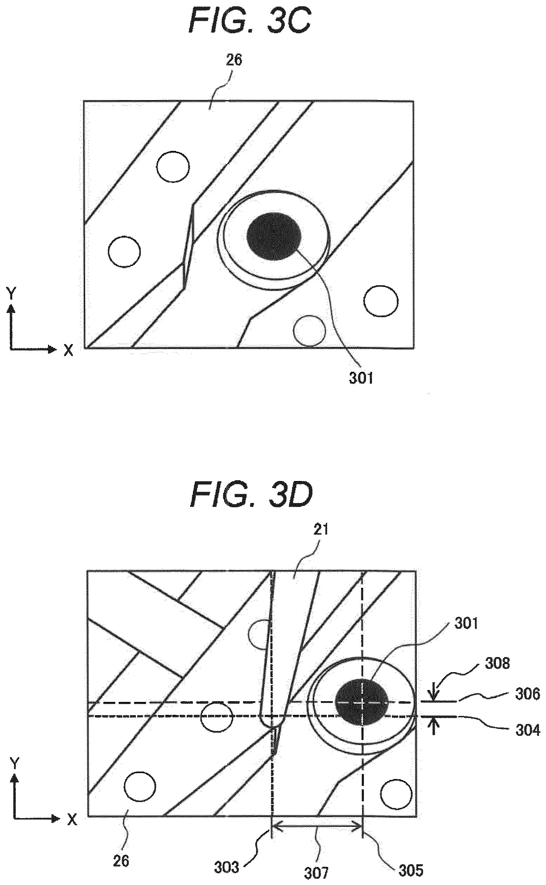

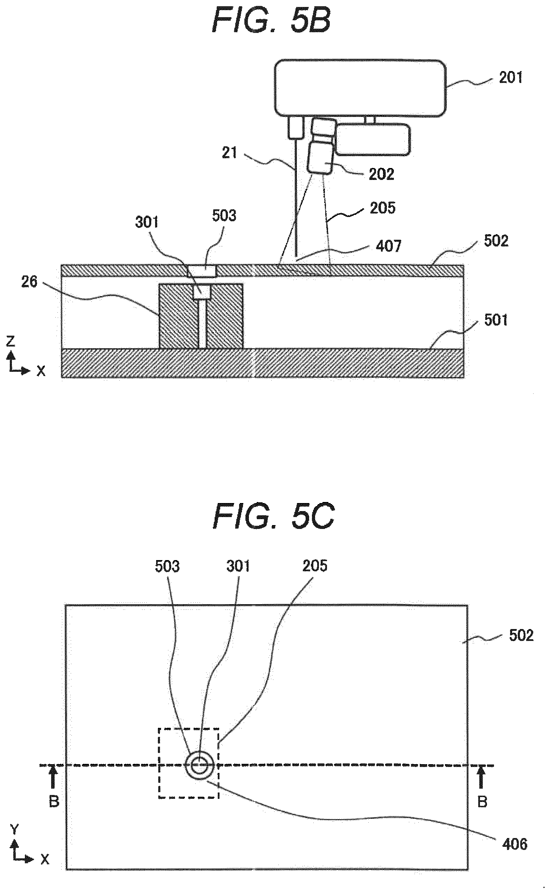

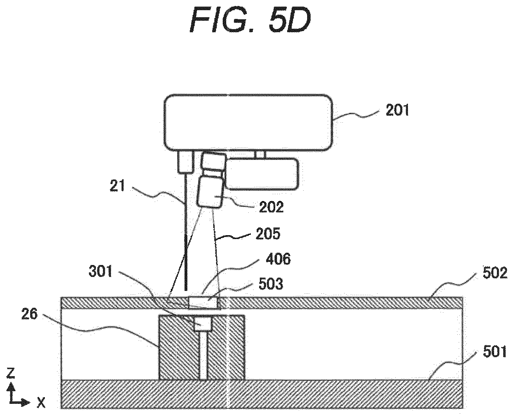

FIG. 1 depicts a configuration of an automated analyzer 10 according to an embodiment of the present invention. The automated analyzer 10 includes a reagent disc 12, a reaction disc 13, a reagent dispensing mechanism 14, a sample dispensing mechanism 15, a reagent cleaning tank 26 (which is not shown in FIG. 1 but is shown in FIGS. 3A, 3C, 3D, 5B, and 5D), and a sample cleaning tank 27. The automated analyzer 10 is provided with a plurality of reagent containers 11, a plurality of sample tubes 23, and a plurality of reaction cells 25. The automated analyzer 10 may include, as its constituent elements, a plurality of reagent containers 11, a plurality of sample tubes 23, and a plurality of reaction cells 25.

The automated analyzer 10 executes an analysis process of analyzing a mixed liquid of a reagent and a sample, the mixed liquid being held in each reaction cell 25. In FIG. 1, the vertical direction of the automated analyzer 10 is defined as a Z direction and two directions perpendicular to the Z direction are defined as horizontal directions, that is, an X direction and a Y direction.

Each reagent container 11 is a container that holds the reagent. The reagent disc 12 carries the plurality of reagent containers 11 on its circumference, and rotates to move the reagent containers 11. For example, in the automated analyzer 10 shown in FIG. 1, the reagent disc 12 carries the plurality of reagent containers 11 on two circumferences different in radius from each other.

Each sample tube 23 is a container that holds a sample. The sample is, for example, a specimen extracted from blood, such as serum or whole blood, urine, or the like. The sample tube 23 is, for example, a blood collection tube. A plurality of sample tubes 23 are placed on one sample rack 24. A plurality of sample racks 24 move on a transfer line 101 so that samples held in sample tubes 23 are analyzed.

The reaction cell 25 is a container that holds the mixed liquid of the reagent and the sample and that mixes the reagent and the sample together. The reaction disc 13 carries the plurality of reaction cells 25 on its circumference, and rotates to move the reaction cells 25. In the reaction disc 13, the reagent and the sample are mixed and the resulting reaction is measured. FIG. 1 shows an enlarged view of four reaction cells 25 placed on the reaction disc 13.

The reagent dispensing mechanism 14 includes a reagent nozzle 21 that dispenses the reagent and a dispensing arm that moves the reagent nozzle 21, and performs an operation of sucking and delivering the reagent. The sample dispensing mechanism 15 includes a sample nozzle 22 that dispenses the sample and a dispensing arm that moves the sample nozzle 22, and performs an operation of sucking and delivering the sample. The automated analyzer 10 shown in FIG. 1 includes, for example, two reagent dispensing mechanisms 14 and two sample dispensing mechanisms 15.

The reagent cleaning tank 26 is a container in which a front end of the reagent nozzle 21, the front end being stained with the reagent sticking thereto, is washed off with water to clean the reagent nozzle 21. The sample cleaning tank 27 is a container in which a front end of the sample nozzle 22, the front end being stained with the sample sticking thereto, is washed off with water to clean the sample nozzle 22. The reagent cleaning tank 26 and the sample cleaning tank 27 have openings (cleaning holes) through which the reagent nozzle 21 and the sample nozzle 22 pass, respectively.

The reagent held in the reagent container 11 is moved by the reagent disc 12, is sucked by the reagent nozzle 21 of the reagent dispensing mechanism 14, and is delivered to the reaction cell 25. The sample held in the sample tube 23 is placed on the sample rack 24, is moved on the transfer line 101, is sucked by the sample nozzle 22 of the sample dispensing mechanism 15, and is delivered to the reaction cell 25.

At the reagent dispensing mechanism 14, a reagent suction position, at which the reagent nozzle 21 sucks the reagent from the reagent container 11, a reagent dispensing position, at which the reagent nozzle 21 delivers the reagent to the reaction cell 25, and a reagent nozzle cleaning position, at which the reagent cleaning tank 26 for cleaning the reagent nozzle 21 is located, are set in advance as stop positions of the reagent nozzle 21. The stop positions of the reagent nozzle 21 are positions at which in an analysis process executed by the automated analyzer 10, the reagent nozzle 21 stops moving.

The reagent dispensing mechanism 14 moves the reagent nozzle 21 to each stop position. At each of the stop positions (the reagent suction position, the reagent dispensing position, and reagent nozzle cleaning position), the reagent dispensing mechanism 14 causes the reagent nozzle 21 to move up and down in adjustment to the height of each of the reagent container 11, the reaction cell 25, and the reagent cleaning tank 26.

At the sample dispensing mechanism 15, a sample suction position, at which the sample nozzle 22 sucks the sample from the sample tube 23, a sample delivery position, at which the sample nozzle 22 delivers the sample to the reaction cell 25, and a sample nozzle cleaning position, at which the sample cleaning tank 27 for cleaning the sample nozzle 22 is located, are set in advance as stop positions of the sample nozzle 22. The stop positions of the sample nozzle 22 are positions at which in the analysis process executed by the automated analyzer 10, the sample nozzle 22 stops moving.

The sample dispensing mechanism 15 moves the sample nozzle 22 to each stop position. At each of the stop positions (the sample suction position, the sample delivery position, and sample nozzle cleaning position), the sample dispensing mechanism 15 causes the sample nozzle 22 to move up and down in adjustment to the height of each of the sample tube 23, the reaction cell 25, and the sample cleaning tank 27.

To carry out the above operations, the reagent dispensing mechanism 14 and the sample dispensing mechanism 15 have configurations that allow the reagent nozzle 21 and the sample nozzle 22 to be moved in the horizontal direction and the vertical direction, respectively. FIG. 1 shows, for example, a configuration in which the reagent dispensing mechanisms 14 have two degrees of freedom in rotation around two axes in the horizontal direction and a configuration in which the sample dispensing mechanisms 15 have one degree of freedom in rotation around one axis in the horizontal direction. The configurations of the reagent dispensing mechanisms 14 and the sample dispensing mechanisms 15 are not limited to these configurations. The reagent dispensing mechanisms 14 and the sample dispensing mechanisms 15 may have any given configuration, such as a configuration affording a combination of two degrees of freedom in translation movement along one axis and rotation around one axis or a configuration affording three or more degrees of freedom.

The automated analyzer 10 controls the reagent dispensing mechanism 14 and the sample dispensing mechanism 15 through an automated analyzer control unit, which will be described later. The automated analyzer 10 includes a measurement unit (not illustrated), and makes photometric measurement of the mixed liquid of the reagent and the sample that is stored in the reaction cell 25, thereby analyzing a given component in the sample for concentration or the like. The measurement unit includes, for example, a light source and a photometer. The photometer is, for example, an absorptiometer or a scattering photometer.

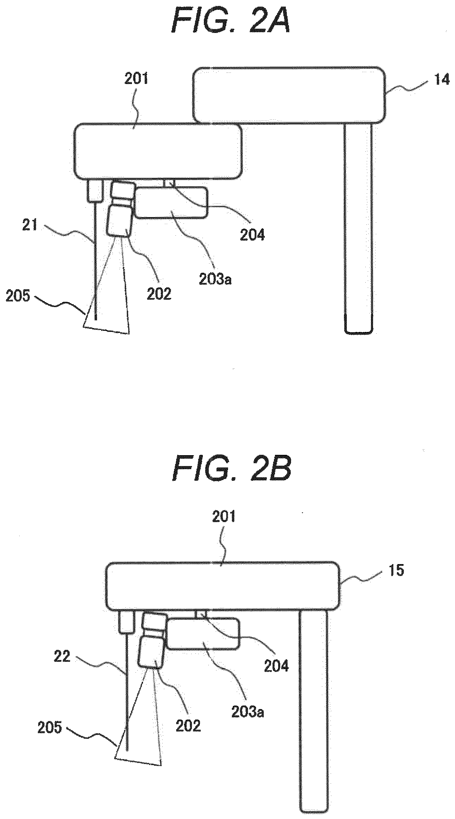

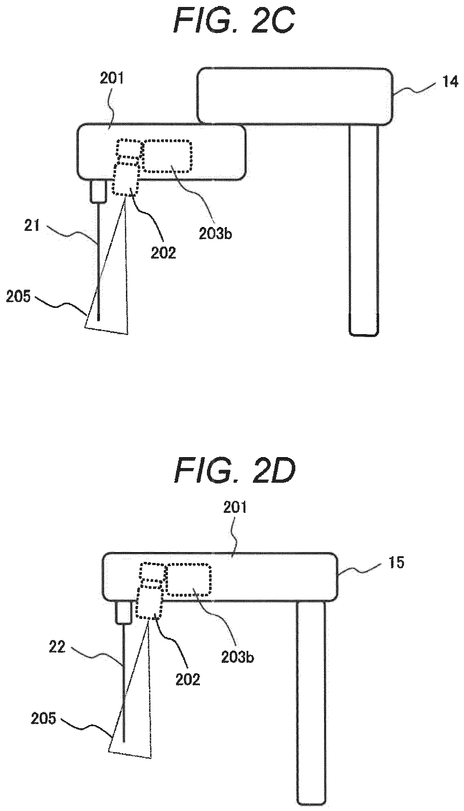

FIGS. 2A to 2D depict the dispensing mechanisms 14 and 15 included in the automated analyzer 10 according to this embodiment. FIG. 2A depicts a reagent dispensing mechanism 14 including an attachable/detachable imaging device. FIG. 2B depicts a sample dispensing mechanism 15 including an attachable/detachable imaging device. FIG. 2C depicts a reagent dispensing mechanism 14 including a built-in imaging device. FIG. 2D depicts a sample dispensing mechanism 15 including a built-in imaging device.

In this embodiment, as an example, a configuration in which both the reagent dispensing mechanism 14 and the sample dispensing mechanism 15 include an imaging device will be described. In the automated analyzer 10 according to the present invention, both of the reagent dispensing mechanism 14 and the sample dispensing mechanism 15 including the imaging device may be unnecessary and one of the reagent dispensing mechanism 14 and the sample dispensing mechanism 15 may include the imaging device. Which one of the reagent dispensing mechanism 14 and the sample dispensing mechanism 15 includes the imaging device can be determined according to, for example, the sizes of the reagent nozzle 21 and the sample nozzle 22 and to the size of the opening of the imaging target (e.g., the reagent container 11, the sample tube 23, the reaction cell 25, the reagent cleaning tank 26, and the sample cleaning tank 27). It should be noted that, in the following description, description of the imaging device of the reagent dispensing mechanism 14 is description of a case of the reagent dispensing mechanism 14 including the imaging device, and description of the imaging device of the sample dispensing mechanism 15 is description of a case of the sample dispensing mechanism 15 including the imaging device.

The dispensing mechanisms 14 and 15 shown respectively in FIGS. 2A and 2B each include a dispensing arm 201 and the attachable/detachable imaging device located under the dispensing arm 201. The imaging device has a camera 202 and an image acquiring unit 203a, and is detachably fixed to the dispensing arm 201 by a connection portion 204. The camera 202 has a lens. The image acquiring unit 203a has a battery. Because the camera 202 and the image acquiring unit 203a can be attached to and detached from the dispensing mechanisms 14 and 15, the camera 202 and the image acquiring unit 203a are attached to the dispensing mechanisms 14 and 15 and are used when the positions of the nozzles 21 and 22 are adjusted. FIGS. 2A and 2B each show an imaging range 205 of the camera 202.

The configuration in which the dispensing mechanisms 14 and 15 each include the attachable/detachable imaging device (the camera 202 and the image acquiring unit 203a) offers two main advantages. One advantage is that when a normal analysis process is carried out, the imaging device can be removed to reduce the mass of the dispensing arm 201 and therefore a load on the motor that drives the dispensing arm 201 can be reduced. Another advantage is that because the imaging device is not always attached to all dispensing mechanisms 14 and 15, the cost is reduced to be lower than the cost in a case of attaching the imaging device to all dispensing mechanisms 14 and 15.

The dispensing mechanisms 14 and 15 shown respectively in FIGS. 2C and 2D each include the dispensing arm 201 and the imaging device built in the dispensing arm 201. The imaging device has the camera 202 and an image acquiring unit 203b. The camera 202 has a lens. The image acquiring unit 203b does not have a battery. Being powered inside the dispensing arm 201, the imaging device does not need a battery. At least a part of the lens of the camera 202 is exposed from the dispensing arm 201. FIGS. 2C and 2D each show the imaging range 205 of the camera 202.

Main advantages of the configuration in which the dispensing mechanisms 14 and 15 each include the built-in imaging device (the camera 202 and the image acquiring unit 203b) are an advantage that the mass of the dispensing arm 201 is reduced because of the battery being unnecessary and an advantage that the nozzles 21 and 22 can be constantly monitored by the imaging device during execution of the normal analysis process.

In the dispensing mechanisms 14 and 15 shown in FIGS. 2A to 2D, when the dispensing arms 201 move the nozzles 21 and 22, the cameras 202 move together and therefore the imaging ranges 205 move as well.

In the automated analyzer 10 according to this embodiment, the imaging device (the camera 202 and image acquiring unit 203a or 203b) is configured such that the front end of each of the nozzles 21 and 22 enters the imaging range 205 where the camera 202 is focused on the front end of each of the nozzles 21 and 22. The imaging device, therefore, can take an image of an object as distant from the camera 202 as the front end of each of the nozzles 21 and 22 is.

FIGS. 3A to 3D are examples of images of the reagent nozzle 21 and the cleaning hole 301, the images being taken by the imaging device of the automated analyzer 10 according to this embodiment. The cleaning hole 301, which is formed on the reagent cleaning tank 26 and on the sample cleaning tank 27, is the opening through which each of the nozzles 21 and 22 pass, that is, an adjustment target. FIGS. 3A, 3C, and 3D show an example of the cleaning hole 301 of the reagent cleaning tank 26. FIGS. 3A to 3D show images on a horizontal plane (XY plane). In FIGS. 3A to 3D, the horizontal direction along the paper surface is the X direction and the vertical direction with respect to the paper surface is the Y direction.

FIG. 3A depicts an example of an image of the nozzle 21 located above the cleaning hole 301. Because the nozzle 21 is put through the cleaning hole 301 into the reagent cleaning tank 26 and is cleaned there, the position of the nozzle 21 needs to be adjusted so that the front end of the nozzle 21 is located at the center of the cleaning hole 301. The image shown in FIG. 3A indicates a situation where when the automated analyzer 10 tries to extract an edge of the front end of the nozzle 21, an edge the reagent cleaning tank 26 has (e.g., an edge of a protrusion of the reagent cleaning tank 26) overlaps the front end of the nozzle 21, which makes difficult detection of the accurate position of the front end of the nozzle 21. In addition, because the cleaning hole 301 overlaps the nozzle 21 in the image, detecting the center of the cleaning hole 301 is difficult, too.

FIG. 3B depicts an example of an image of the nozzle 21 that is taken at a position at which the back of the front end of the nozzle 21 is a blank background. In the image shown in FIG. 3B, no different component overlaps the vicinity of an edge 302 of the front end of the nozzle 21. The automated analyzer 10 is, therefore, able to detect the position of the front end of the nozzle 21 easily and highly accurately.

From an image of the nozzle 21, the automated analyzer 10 can detect the position of the front end of the nozzle 21 by any given method. For example, by the following methods, the automated analyzer 10 can extract the edge 302 of the front end of the nozzle 21 and detect the position of the front end of the nozzle 21. Specifically, the automated analyzer 10 adjusts the state of a taken image by contrast adjustment, gamma correction, or the like, separates edges and other areas from each other through binarization, performs matching of a plurality of edges to the shape of the front end of the nozzle 21, and extracts the edge 302 determined to be the edge corresponding to the front end of the nozzle 21. From the edge 302 extracted as the edge corresponding to the front end of the nozzle 21, the automated analyzer 10 calculates coordinates of the center of the nozzle 21, based on the outer diameter of the nozzle 21, and determines the calculated coordinates of the center to be the position of the front end of the nozzle 21. In the image shown in FIG. 3B, an X coordinate 303 and a Y coordinate 304 are shown as the coordinates of the center of the nozzle 21. When the position of the nozzle 21 is adjusted based on the distance between the outer surface of the nozzle 21 and the cleaning hole 301, however, the automated analyzer 10 may calculate coordinates of a preset point on the edge 302 of the front end of the nozzle 21, instead of calculating the coordinates of the center of the nozzle 21, and may determine the calculated coordinates of the point to be the position of the front end of the nozzle 21.

FIG. 3C depicts an example of an image of the cleaning hole 301 that is taken after the nozzle 21 is removed from the dispensing arm 201. Because the shape and size of the cleaning hole 301 are known in advance, the automated analyzer 10 can extract the edge of the cleaning hole 301 from the image shown in FIG. 3C, proving that the automated analyzer 10 possesses contour information on the cleaning hole 301 in advance. However, operating the dispensing arm 201 from which the nozzle 21 is removed requires an extra operation, such as blocking a channel connected to the nozzle 21 to prevent liquid leakage. For this reason, taking an image of the cleaning hole 301 after removal of the nozzle 21 is considered to be unrealistic.

FIG. 3D depicts an example of an image of the cleaning hole 301 that is taken after the nozzle 21 is moved to a position at which the nozzle 21 and the cleaning hole 301 do not overlap. In the image shown in FIG. 3D, the cleaning hole 301 does not overlap the nozzle 21. The automated analyzer 10 is, therefore, able to extract the edge of the cleaning hole 301 from the image shown in FIG. 3D in the same manner as it would extract the edge of the cleaning hole 301 from the image shown in FIG. 3C, thus being able to calculate the coordinates of the center of the cleaning hole 301. In the image shown in FIG. 3D, an X coordinate 305 and a Y coordinate 306 are indicated as the coordinates of the center of the cleaning hole 301.

A positional relationship between the camera 202 and the nozzle 21 remains the same in both cases of taking the image shown in FIG. 3B and taking the image shown in FIG. 3D. In the image shown in FIG. 3D, therefore, the coordinates of the center of the nozzle 21 are the same as the coordinates (the X coordinate 303 and the Y coordinate 304) of the same obtained from the image shown in FIG. 3B. In the image shown in FIG. 3D, an amount of positional shift between the nozzle 21 and the cleaning hole 301 in the X direction is defined as a difference 307 between the X coordinate 303 of the center of the nozzle 21 and the X coordinate 305 of the center of the cleaning hole 301, and the same in the Y direction is defined as a difference 308 between the Y coordinate 304 of the center of the nozzle 21 and the Y coordinate 306 of the center of the cleaning hole 301.

The dispensing mechanisms 14 and 15 each drive the dispensing arm 201 with a stepping motor. Therefore, when the automated analyzer 10 comes to know respective amounts of positional shift between the nozzle 21 and the cleaning hole 301 in the X direction and the Y direction (the difference 307 in the X direction and the difference 308 in the Y direction), the automated analyzer 10 moves the nozzle 21 by the amounts of positional shift, thus being able to align the position of the center of the nozzle 21 with the position of the center of the cleaning hole 301. Specifically, the automated analyzer 10 converts the amounts of positional shift into the number of pulses that represents a moving distance from the current position of the nozzle 21, and gives the number of pulses as an instruction value, to the motor, which moves the dispensing arm 201. The automated analyzer 10 is thus able to adjust the position of the nozzle 21 in the horizontal direction so that the position of the center of the nozzle 21 is aligned with the position of the center of the cleaning hole 301.

Even if the dispensing mechanisms 14 and 15 are each configured to drive the dispensing arm 201 with a motor different from the stepping motor, the position of the nozzle 21 can be adjusted in the same manner by, for example, a method of measuring a rotation angle of the dispensing arm 201 with an encoder.

The dispensing mechanisms 14 and 15 each have a function of moving the dispensing arm 201 to the same position (origin), using a limit sensor, every time the automated analyzer 10 starts. Because of this function, if the automated analyzer 10 knows the moving distance of the nozzle 21 that aligns the position of the center of the nozzle 21 with the position of the center of the cleaning hole 301, the automated analyzer 10 is able to adjust the position of the nozzle 21 to align the position of the nozzle 21 with the center of the cleaning hole 301 every time the automated analyzer 10 starts.

As described above, by taking an image of the nozzle 21 at the position at which the back of the front end of the nozzle 21 is the blank background (FIG. 3B), the automated analyzer 10 according to this embodiment can highly accurately detect the position of the front end of the nozzle 21, thus being able to accurately adjust the position of the nozzle 21 in the horizontal direction relative to the adjustment target (which is the cleaning hole 301 in the examples shown in FIGS. 3A to 3D).

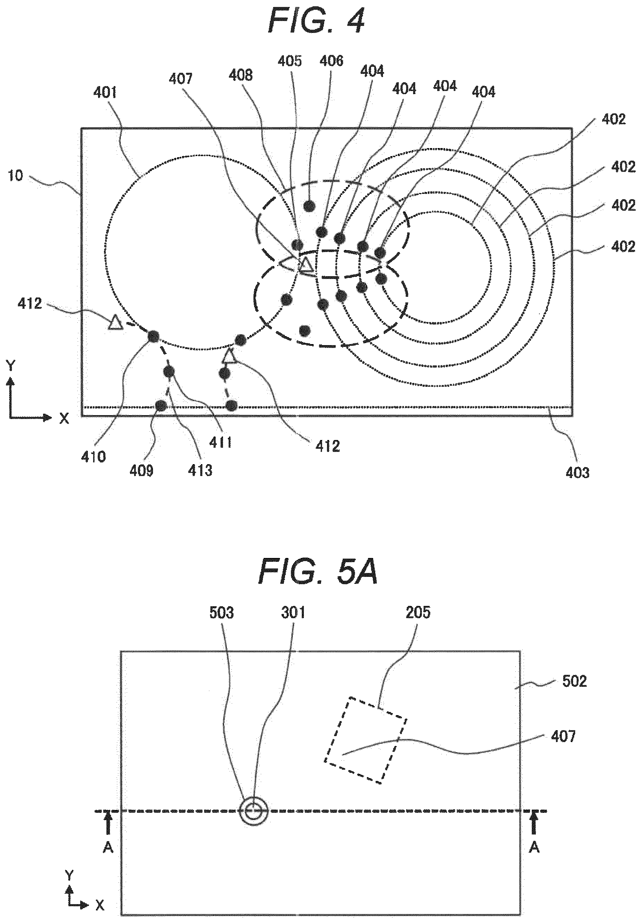

FIG. 4 depicts an example of stop positions (stop positions in the horizontal direction) of the reagent nozzle 21 and the sample nozzle 22 on a horizontal plane (XY plane) in the automated analyzer 10 according to this embodiment.

In the automated analyzer 10, the reagent containers 11, the sample tubes 23, and the reaction cells 25 move. Some reagent containers 11 have a lid that prevents evaporation of the reagent held in the container. In this embodiment, as an example, the reagent container 11 has the lid, which is provided with a hole (opening) through which the reagent nozzle 21 passes. Hereinafter, the hole of the lid of the reagent container 11 will be simply referred to also as a "hole of the reagent container 11".

FIG. 4 shows tracks 402 of the center of the hole of the reagent container 11, a track 403 of the center of the sample tube 23, and a track 401 of the center of the reaction cell 25. Because two holes are formed on one reagent container 11 and the reagent containers 11 are arranged along two circumferences with different diameters, as shown in FIG. 1, the tracks 402 are shown as four circles in FIG. 4.

Stop positions of the reagent nozzle 21 include a reagent suction position 404, at which the reagent is sucked from the reagent container 11, a reagent dispensing position 405, at which the reagent is delivered to the reaction cell 25, and a reagent nozzle cleaning position 406, at which the cleaning hole 301 of the reagent cleaning tank 26 for cleaning the reagent nozzle 21 is present. The reagent suction position 404 is located on the track 402 of the center of the hole of the reagent container 11. Because there are four tracks 402 of the center of the hole of the reagent container 11, one reagent suction position 404 is set for each of the four tracks 402. The reagent dispensing position 405 is located on the track 401 of the center of the reaction cell 25. Because the automated analyzer 10 includes two reagent dispensing mechanisms 14, four reagent suction positions 404, one reagent dispensing position 405, and one reagent nozzle cleaning position 406 are set for each of the two reagent dispensing mechanisms 14.

Stop positions of the sample nozzle 22 includes a sample suction position 409, at which the sample is sucked from the sample tube 23, a sample delivery position 410, at which the sample is delivered to the reaction cell 25, and a sample nozzle cleaning position 411, at which the cleaning hole 301 of the sample cleaning tank 27 for cleaning the sample nozzle 22 is present. The sample suction position 409 is located on the track 403 of the center of the sample tube 23. The sample delivery position 410 is located on the track 401 of the center of the reaction cell 25. Because the automated analyzer 10 includes two sample dispensing mechanisms 15, one sample suction position 409, one sample delivery position 410, and one sample nozzle cleaning position 411 are set for each of the two sample dispensing mechanisms 15.

In FIG. 4, stop positions of the reagent nozzle 21 and the sample nozzle 22 are indicated by black circles.

In addition, at the reagent dispensing mechanism 14, a position at which an image of the reagent nozzle 21 is taken is set as an imaging position 407 of the reagent nozzle 21. At the sample dispensing mechanism 15, a position at which an image of the sample nozzle 22 is taken is set as an imaging position 412 of the sample nozzle 22. The imaging positions 407 and 412 are located on tracks along which the reagent nozzle 21 and the sample nozzle 22 can move, respectively.

In FIG. 4, the imaging position 407 of the reagent nozzle 21 and the imaging position 412 of the sample nozzle 22 are indicated by triangular symbols.

The imaging positions 407 and 412 are positions at which the backs of the front ends of the nozzles 21 and 22 are blank backgrounds, respectively, in images of the front ends of the nozzles 21 and 22, the images being taken by the camera 202. A blank background is a background that allows the automated analyzer 10 to detect the position of the front end of the nozzle 21 with intended accuracy, from a taken image of the nozzle 21. For example, a surface on which a change in contrast is so little that the back of the nozzles 21 or 22 is recognized as a surface with no irregularities can be used as a blank background.

The imaging positions 407 and 412 are different from stop positions of the nozzles 21 and 22, respectively. At stop positions of the nozzles 21 and 22, respective backs of the front ends of the nozzles 21 and 22 do not appear as blank backgrounds in images of the front ends of the nozzles 21 and 22, the images being taken by the camera 202. The camera 202 takes images of respective front ends of the nozzles 21 and 22 at the imaging positions 407 and 412, respectively.

At the dispensing mechanisms 14 and 15, the imaging positions 407 and 412 may be set as any given positions, providing that the set positions are positions to which the nozzles 21 and 22 can move and are the positions at which the backs of the front ends of the nozzles 21 and 22 are blank backgrounds, respectively, in taken image of the nozzles 21 and 22. A plurality of imaging positions 407 and a plurality of imaging positions 412 may be set at the dispensing mechanisms 14 and 15, respectively.

In FIG. 4, ranges 408 in which the reagent nozzles 21 are allowed to move, respectively, are indicated by broken lines, the ranges 408 being set for two reagent dispensing mechanisms 14 having two degrees of freedom in the horizontal direction. Each reagent nozzle 21 is allowed to move inside each range 408 demarcated by a broken line. In a case where a range 408 in which the nozzle 21 of one reagent dispensing mechanism 14 of a plurality of reagent dispensing mechanisms 14 is allowed to move overlaps a range 408 in which the nozzle 21 of another reagent dispensing mechanism 14 is allowed to move, the imaging position 407 may be set in this overlapping region.

Because the dispensing mechanism 15 is configured to have one degree of freedom in the horizontal direction, the imaging position 412 is on the track 413 of the sample nozzle 22. The nozzle 22 is allowed to move on the track 413 only. According to the automated analyzer 10 of this embodiment, even in the configuration in which the dispensing mechanism 15 has one degree of freedom in the horizontal direction, by taking an image of the front end of the nozzle 22 at the imaging position 412 and accurately detecting the coordinate differences 307 and 308 shown in FIG. 3D, an amount of adjustment of the position of the nozzle 22 can be grasped accurately and therefore the position of the nozzle 22 can be adjusted efficiently.

The automated analyzer 10 according to this embodiment may have a configuration in which the dispensing mechanisms 14 and 15 each have two degrees of freedom in the horizontal direction. Such a configuration allows efficient automatic adjustment of respective positions of the nozzle 21 and the nozzle 22.

The imaging positions 407 and 412 may be set at a location where the range 408 in which the nozzle 21 of the reagent dispensing mechanism 14 is allowed to move and the range in which the nozzle 22 of the sample dispensing mechanism 15 is allowed to move (the track 413 of the nozzle 22) overlap each other.

As described above, the imaging positions 407 and 412 are the positions to which the nozzles 21 and 22 can move (positions in the range 408 in which the nozzle 21 is allowed to move and on the track 413 of the nozzle 22), respectively, are the positions different from the stop positions of the nozzles 21 and 22 (the suction position, the delivery position, and the cleaning position), and are the positions at which the backs of the front ends of the nozzles 21 and 22 are the blank backgrounds (surface with no irregularities and a little change in contrast), respectively, when images of the front ends of the nozzles 21 and 22 are taken by the camera 202. The automated analyzer 10 can have an area (surface) where the backs of the front ends of the nozzles 21 and 22 appear as the blank backgrounds in taken images of the nozzles 21 and 22.

The imaging position 407 and the imaging position 412 may be constantly covered with a cover, except when respective positions of the reagent nozzle 21 and the sample nozzle 22 are adjusted. For example, the imaging positions 407 and 412 are covered with the cover when the automated analyzer 10 carries out the analysis process, and are not protected with the cover when the automated analyzer 10 adjusts the positions of the nozzles 21 and 22. The cover is provided to prevent the imaging positions 407 and 412 from being stained, and reduces a risk that a stain (area where a contrast change arises) that causes a detection error appears on the backs of the nozzles 21 and 22 in taken images when the positions of the nozzles 21 and 22 are adjusted.

Besides, the cover can be used as blank backgrounds in images of the front ends of the nozzles 21 and 22 that are taken by the camera 202 when the positions of the nozzles 21 and 22 are adjusted. In other words, at least one of the imaging positions 407 and 412 may be on the cover.

The cover may have any configuration, providing that it covers at least one of the reagent container 11, the sample tube 23, the reaction cell 25, the reagent cleaning tank 26, and the sample cleaning tank 27 and covers or does not cover the imaging positions 407 and 412, depending on situations. For example, the cover may be configured to be openable/closable, slidable, or removable.

Another configuration may also be adopted, according to which, only when the positions of the nozzles 21 and 22 are adjusted, a member (background member) having a surface serving as a blank background is set at each of the imaging positions 407 and 412, at which the background member is used as the blank background. The background member may have any given configuration, providing that it has the surface serving as the blank background. For example, the background member may be provided as a sheet, a seal, or a block material. When the automated analyzer 10 does not have the area where the backs of the front ends of the nozzles 21 and 22 appear as the blank backgrounds, using such a background member allows the automated analyzer 10 to have the area where the backs of the front ends of the nozzles 21 and 22 appear as the blank backgrounds.

When a plurality of imaging positions 407 (or imaging positions 412) are set at the dispensing mechanism 14 (or the dispensing mechanism 15), the automated analyzer 10 can automatically detect stains and/or obstacles from images taken by the camera 202 at the imaging positions 407 (imaging positions 412), based on the number of edges, edge areas, or a degree of color change, and automatically select an imaging position 407 (imaging position 412) at which fewer stains and/or obstacles are found in an image. When the position of the front end of the nozzle 21 (the nozzle 22) cannot be detected from an image of the nozzle 21 (the nozzle 22) taken by the camera 202 at one imaging position 407 (imaging position 412), the automated analyzer 10 can replace the imaging position 407 (imaging position 412) with a different imaging position 407 (imaging position 412) through the automated analyzer control unit and take an image of the nozzle 21 (nozzle 22) at the different imaging position 407 (imaging position 412).

Furthermore, the automated analyzer 10 may obtain the position of the front end of the nozzle 21 (nozzle 22) by taking images at a plurality of imaging positions 407 (or imaging positions 412), detecting positions of the front end of the nozzle 21 (or nozzle 22) from these images, respectively, and averaging a plurality of detected positions of the front end. By this averaging, an error in detection of the position of the front end of the nozzle 21 (nozzle 22) can be reduced.

FIGS. 5A to 5D depict examples in which the position of the reagent nozzle 21 is adjusted near the imaging position 407 of the reagent nozzle 21 and the reagent nozzle cleaning position 406. The following description can also apply to a case where the position of the sample nozzle 22 is adjusted.

FIGS. 5A and 5B depict a state in which the dispensing arm 201 is moved in such a way as to locate the nozzle 21 at the imaging position 407. FIG. 5A depicts an example of the imaging position 407, the cleaning hole 301 of the reagent cleaning tank 26, and the imaging range 205 of the camera 202 that are on the horizontal plane (XY plane). FIG. 5B depicts a cross-section taken along an A-A line of FIG. 5A.

In the automated analyzer 10, components, such as the reagent cleaning tank 26 and the dispensing mechanism 14, are placed on the base 501. Above the base 501, a cover 502 is set so that a liquid scattered by analysis process operations, such as the reagent, the sample, and a cleaning solution, is easily wiped off. The cover 502 covers at least one of the reagent container 11, the sample tube 23, the reaction cell 25, the reagent cleaning tank 26, and the sample cleaning tank 27, and covers or does not cover the imaging positions 407 and 412, depending on situations. The cover 502 is provided with a passage hole 503 allowing the nozzle 21 to access the reagent container 11, the sample tube 23, the reaction cell 25, the reagent cleaning tank 26, and the sample cleaning tank 27.

As described above, the cover 502 can be used as the blank background in an image of the front end of the nozzle 21 that is taken by the camera 202 when the position of the nozzle 21 is adjusted. When an image of the front end of the nozzle 21 is taken with the cover 502 removed, the image may be taken after a block material or the like as high as the reagent cleaning tank 26 (a block material whose upper surface has an area with no irregularities and a little change in contrast) is placed on the base 501 as a background member.

At the imaging position 407, the image of the front end of the nozzle 21 that is exemplarily shown in FIG. 3B can be taken. Thus, from an image that is taken when the nozzle 21 is at the imaging position 407 as shown in FIG. 5B, the coordinates 303 and 304 of the center of the nozzle 21 can be accurately calculated.

The automated analyzer 10 includes a number of openings formed near the passage hole 503, the openings being used to access the reaction cell 25 and the reagent container 11, but, for a clearer view of the drawings, these openings are not shown FIGS. 5A and 5B. There is the risk of the liquid's scattering onto the vicinity of these openings. It is preferable, for this reason, that the imaging position 407 be set at a position to which the nozzles 21 and 22 of the dispensing arms 201 not used in a dispensing operation during the analysis process can move.

FIGS. 5C and 5D depict a state in which the dispensing arm 201 is moved so that the nozzle 21 is located in the vicinity of the reagent nozzle cleaning position 406 and is located also at a position at which the nozzle 21 does not overlap the cleaning hole 301 in a taken image of the cleaning hole 301. FIG. 5C depicts an example of the reagent nozzle cleaning position 406, the cleaning hole 301, and the imaging range 205 of the camera 202 that are on the horizontal plane (XY plane). FIG. 5D depicts a cross-section taken along a B-B line of FIG. 5C.

The nozzle 21 has its front end at a position shifted from the cleaning hole 301, and therefore when an image of the cleaning hole 301 is taken by the camera 202, the nozzle 21 and the cleaning hole 301 do not overlap in the taken image, as in the image exemplarily shown in FIG. 3D. Thus, from an image taken in the state shown in FIG. 5D, the coordinates 305 and 306 of the center of the cleaning hole 301 can be accurately calculated.

The passage hole 503 of the cover 502 is larger than the cleaning hole 301. An image of the cleaning hole 301, therefore, can be taken without removing the cover 502. However, the image may be taken with the cover 502 removed, depending on the depth and size of the cleaning hole 301 and the passage hole 503.

The position of the cleaning hole 301 and that of the front end of the nozzle 21 in the vertical direction (Z direction) are different from each other. However, if these positions are in a range in which the camera 202 is in focus, the edge of the cleaning hole 301 that is sufficiently larger than the nozzle 21 can be extracted. In addition, because the position of the dispensing arm 201 in the vertical direction can be known from the number of pulses of the stepping motor, the distance between the front end of the nozzle 21 and the reagent cleaning tank 26 in the vertical direction can be calculated. As a result, a taken image of the cleaning hole 301 can be corrected into an image in which the position of the cleaning hole 301 and that of the front end of the nozzle 21 in the vertical direction are rendered the same.

The automated analyzer 10 according to this embodiment includes the automated analyzer control unit, which controls a process of adjusting the positions of the reagent nozzle 21 and the sample nozzle 22. The automated analyzer control unit moves the reagent nozzle 21 and the sample nozzle 22 to the imaging position 407 and the imaging position 412, respectively, takes images of the nozzles 21 and 22, using the camera 202, at the imaging positions 407 and 412, respectively, and adjusts the positions of the nozzles 21 and 22.

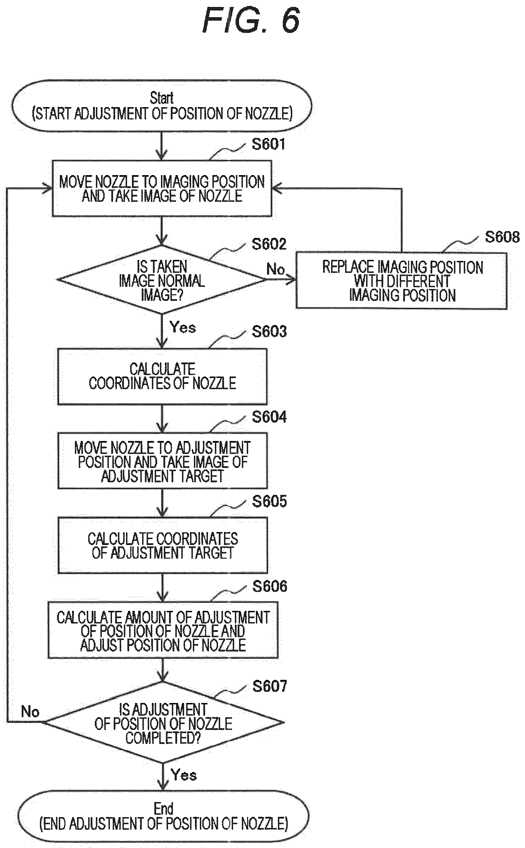

FIG. 6 depicts a flow of a process by which the automated analyzer control unit of the automated analyzer 10 according to this embodiment adjusts the position of the reagent nozzle 21 (or the sample nozzle 22). The following description is description of an example in which the position of the reagent nozzle 21 is adjusted. The following description, however, applies also to a case where the position of the sample nozzle 22 is adjusted.

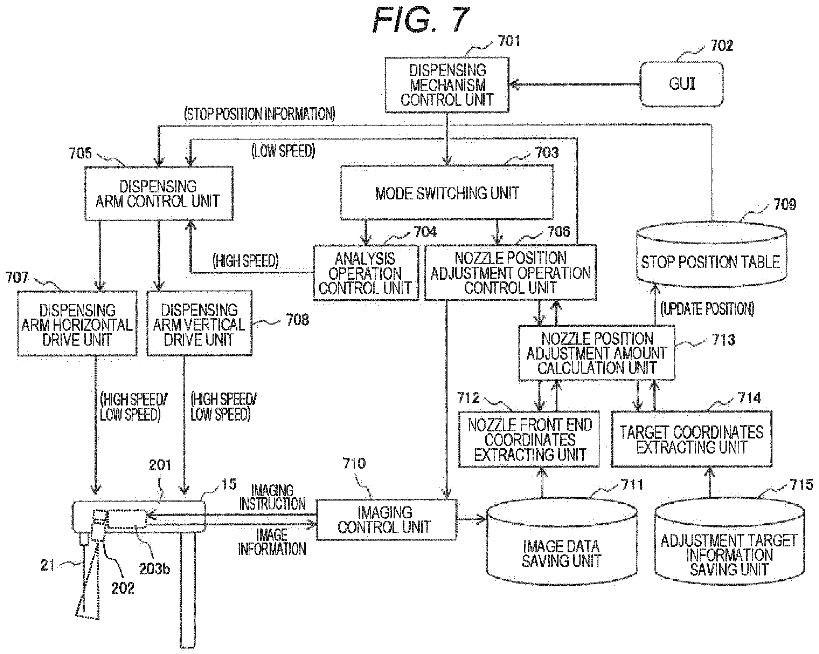

In S601, the automated analyzer control unit moves the reagent nozzle 21 to the imaging position 407 of the reagent nozzle 21, and takes an image of the nozzle 21, using the camera 202. The camera 202 takes an image of the front end of the nozzle 21 at the imaging position 407. The imaging position 407 is given in advance to the automated analyzer control unit (a stop position table 709 that will be described later with reference to FIG. 7).

In step S602, the automated analyzer control unit determines whether a taken image is a normal image. When the edge of the front end of the nozzle 21 can be extracted from the taken image, the automated analyzer control unit determines that the taken image is a normal image, and proceeds to a process of S603. When the edge of the front end of the nozzle 21 cannot be extracted from the taken image (e.g., when an edge different the edge of the front end of the nozzle 21 is detected in the vicinity of the front end of the nozzle 21 due to the presence of a stain, an obstacle, or the like), the automated analyzer control unit determines that the taken image is an abnormal image, and proceeds to a process of S608.

In S608, the automated analyzer control unit replaces the imaging position 407 with a different imaging position 407. Thereafter, the automated analyzer control unit proceeds to the process of S601, by which the nozzle 21 is moved to the different imaging position 407 at which an image of the front end of the nozzle 21 is taken. When the different imaging position 407 is not set at the dispensing mechanism 14, the automated analyzer control unit does not proceed to the process of S601, and sends an alarm to a GUI or the like.

In step S603, the automated analyzer control unit calculates the coordinates 303 and 304 of the center of the nozzle 21, from a taken normal image (image of the front end of the nozzle 21), and saves the coordinates.

In S604, the automated analyzer control unit moves the nozzle 21 to a position at which the nozzle 21 and the adjustment target (the opening through which the nozzle 21 passes) do not overlap in a taken image of the adjustment target, and causes the camera 202 to take an image of the adjustment target. Hereinafter, the position at which the nozzle 21 and the adjustment target do not overlap in a taken image of the adjustment target will be referred to as an "adjustment target position". The adjustment target position is set in advance. The camera 202 takes an image of the adjustment target when the nozzle 21 is at the adjustment target position.

When taking an image of the reagent cleaning tank 26, the reagent container 11, or the reaction cell 25, as an image of a reagent imaging target, using the camera 202, the automated analyzer control unit takes an image of the reagent imaging target at a position at which the nozzle 21 and the reagent imaging target do not overlap in a taken image of the reagent imaging target. When taking an image of the sample cleaning tank 27, the sample tube 23, or the reaction cell 25, as an image of a sample imaging target, using the camera 202, the automated analyzer control unit takes an image of the sample imaging target at a position at which the nozzle 22 and the sample imaging target do not overlap in a taken image of the sample imaging target.

It is preferable that when moving the nozzle 21 from the imaging position 407 to the adjustment target position, the automated analyzer control unit move the nozzle 21 at a speed sufficiently lower than a speed of moving the nozzle 21 in the analysis process. When the speed of moving the nozzle 21 to the adjustment target position is set low, for example, even when the dispensing mechanism 14 includes the attachable/detachable imaging device (FIG. 2A), a shift in a relative position between the nozzle 21 and the camera 202 that is caused by movement of the nozzle 21 can be prevented. Likewise, in the case of taking an image of the adjustment target (the opening through which the nozzle 22 passes), using the camera 202, it is preferable that when moving the nozzle 22 from the imaging position 412 to the adjustment target position (at which the nozzle 22 and the adjustment target do not overlap), the automated analyzer control unit move the nozzle 22 at a speed sufficiently lower than a speed of moving the nozzle 22 in the analysis process.

In S605, the automated analyzer control unit calculates the coordinates 305 and 306 of the center of the adjustment target, from a taken image of the adjustment target, and saves the coordinates. The automated analyzer control unit obtains the coordinates of the center of the adjustment target in accordance with the size and shape of the adjustment target (the hole of the lid of the reagent container 11, the opening of the sample tube 23, the reaction cell 25, or the cleaning hole 301) shown in the taken image. The position, size, and shape of the adjustment target are given in advance to the automated analyzer control unit. For example, the automated analyzer control unit performs pattern matching, based on the size and shape of the adjustment target that are given in advance, thus being able to obtain the coordinates of the center of the adjustment target, from the image of the adjustment target.

In S606, the automated analyzer control unit calculates an amount of adjustment of the position of the nozzle 21 (the coordinate differences 307 and 308 shown in FIG. 3D), from the coordinates 303 and 304 of the center of the nozzle 21 and the coordinates 305 and 306 of the center of the adjustment target. The automated analyzer control unit then moves the nozzle 21 by the amount of adjustment to match the coordinates 303 and 304 of the center of the nozzle 21 to the coordinates 305 and 306 of the center of the adjustment target. The automated analyzer control unit adjusts the position of the nozzle 21 in this manner. Thereafter, the automated analyzer control unit takes an image of the nozzle 21 and the adjustment target, using the camera 202, and records an adjustment result of the position of the nozzle 21.

The automated analyzer control unit repeatedly executes the above processes of S601 to S606 on all adjustment targets.

In S607, the automated analyzer control unit determines whether it has executed the processes of S601 to S606 on all adjustment targets. When having executed the processes of S601 to S606 on all adjustment targets, the automated analyzer control unit determines that adjustment of the position of the nozzle 21 is completed.

In the process flow shown in FIG. 6, the automated analyzer control unit calculates the coordinates 303 and 304 of the center of the nozzle 21 for every adjustment target. The automated analyzer control unit may calculate the coordinates 303 and 304 of the center of the nozzle 21 for the first adjustment target only, in which case the automated analyzer control unit does not calculate the coordinates 303 and 304 of the center of the nozzle 21 for other adjustment targets and, for adjustment of the position of the nozzle 21, uses the coordinates 303 and 304 of the center of the nozzle 21 that has been calculated for the first adjustment target.

The case of the dispensing mechanism 14 including the attachable/detachable imaging device (FIG. 2A) raises a possibility of a shift in the relative position between the nozzle 21 and the camera 202. It is therefore preferable in this case that the coordinates 303 and 304 of the center of the nozzle 21 be confirmed immediately before the nozzle 21 is moved from the imaging position 407 to the adjustment target position. Besides, a positional shift of the camera 202 can be prevented by setting the imaging position 407 close to each adjustment target position to reduce the distance between the imaging position 407 and the adjustment target position. In addition, when the position of the nozzle 21 is adjusted, the above-mentioned risk of liquid scattering needs to be taken into consideration. It is thus preferable that at adjustment of the position of the nozzle 21, the base 501 be covered with the cover 502 and this cover 502 be used as a blank background in an image of the front end of the nozzle 21 (FIGS. 5B and 5D).

FIG. 7 is a block diagram showing an example of a configuration of the automated analyzer control unit included in the automated analyzer 10 according to this embodiment. The automated analyzer control unit includes a dispensing mechanism control unit 701, a graphical user interface (GUI) 702, a mode switching unit 703, an analysis operation control unit 704, a dispensing arm control unit 705, a nozzle position adjustment operation control unit 706, a dispensing arm horizontal drive unit 707, a dispensing arm vertical drive unit 708, a stop position table 709, an imaging control unit 710, an image data saving unit 711, a nozzle front end coordinates extracting unit 712, a nozzle position adjustment amount calculation unit 713, a target coordinates extracting unit 714, and an adjustment target information saving unit 715. The automated analyzer control unit further includes a mechanism that drives the reagent disc 12, the reaction disc 13, and the transfer line 101, which mechanism is not shown in FIG. 7.

In response to a user's instruction from the GUI 702, the dispensing mechanism control unit 701 instructs the mode switching unit 703 to switch a control mode. In addition, the dispensing mechanism control unit 701 executes the process of S602 shown in FIG. 6 to determine whether an image taken in S601 is a normal image, and executes the process of S608 to replace the imaging position 407 with a different imaging position 407.

The mode switching unit 703 can switch an operation mode of the dispensing mechanisms 14 and 15 between an analysis mode in which the normal analysis process is carried out and an adjustment mode in which adjustment of the positions of the nozzles 21 and 22 is carried out. The mode switching unit 703 may also cause the dispensing mechanisms 14 and 15 to execute a reset mode in which each unit of the dispensing mechanisms 14 and 15 is moved to an initial position and a maintenance mode in which cleaning of the nozzles 21 and 22 and the reaction cell 25 is carried out intensively.

In the analysis mode, the mode switching unit 703 sends an execution instruction to the analysis operation control unit 704. The analysis operation control unit 704 sends an instruction to the dispensing arm control unit 705, causing it to drive the dispensing arms 201. The dispensing arms 201 move the nozzles 21 and 22, respectively, at a high speed.

In the adjustment mode, the mode switching unit 703 sends an execution instruction to the nozzle position adjustment operation control unit 706. The nozzle position adjustment operation control unit 706 sends an instruction to the dispensing arm control unit 705, causing it to drive the dispensing arms 201. The dispensing arms 201 move the nozzles 21 and 22, respectively, at a low speed (which is lower than the speed of moving the nozzles 21 and 22 in the analysis mode).

In response to instructions from the analysis operation control unit 704 and the nozzle position adjustment operation control unit 706, the dispensing arm control unit 705 sequentially sends instructions for driving the motor (e.g., the number of pulses, a pulse rate, etc.), to the dispensing arm horizontal drive unit 707 and the dispensing arm vertical drive unit 708, thus causing them to move the nozzles 21 and 22. Using information stored in the stop position table 709, which will be described later, the dispensing arm control unit 705 can give an instruction on positions at which the nozzles 21 and 22 stop moving.

The dispensing arm horizontal drive unit 707 causes the dispensing arms 201 to move in the horizontal direction, thereby moving the nozzles 21 and 22 in the horizontal direction. The dispensing arm vertical drive unit 708 causes the dispensing arms 201 to move in the vertical direction, thereby moving the nozzles 21 and 22 in the vertical direction. The number of dispensing arm horizontal drive units 707 varies, depending on the degree of freedom of the dispensing arm 201 in the horizontal direction (the number of motors the dispensing arm 201 has). For example, when the dispensing arm 201 has two degrees of freedom in the horizontal direction (that is, has two motors), the number of dispensing arm horizontal drive units 707 is two.

By sending an instruction to the dispensing arm control unit 705, the nozzle position adjustment operation control unit 706 drives the dispensing arms 201, thereby moving the nozzles 21 and 22 to the imaging positions 407 and 412 or the adjustment target positions (at which the nozzles 21 and 22 do not overlap adjustment targets in taken images of the adjustment targets).

The stop position table 709 stores information on the preset imaging positions 407 and 412. The stop position table 709 can update the stored imaging positions 407 and 412. The stop position table 709 further stores information on preset adjustment target positions and information on stop positions (a suction position, a delivery position, and a cleaning position) of the nozzles 21 and 22 in the normal analysis process.

The nozzle position adjustment operation control unit 706 sends an instruction to the imaging control unit 710 to take images at the imaging positions 407 and 412 and the adjustment target positions.

The imaging control unit 710 sends an imaging instruction to the camera 202, causing the camera 202 to take images of the front ends of the nozzles 21 and 22 and the adjustment targets. The imaging control unit 710 receives information on an image taken by the camera 202, from the camera 202, and stores the image in the image data saving unit 711.

When the camera 202 has taken images of the front ends of the nozzles 21 and 22 and the adjustment targets, the nozzle position adjustment operation control unit 706 sends an instruction to the nozzle position adjustment amount calculation unit 713, the instruction causing the nozzle position adjustment amount calculation unit 713 to calculate an amount of adjustment of respective positions of the nozzles 21 and 22 (coordinate differences 307 and 308 shown in FIG. 3D).

Upon receiving the instruction from the nozzle position adjustment operation control unit 706, the nozzle position adjustment amount calculation unit 713 causes the nozzle front end coordinates extracting unit 712 to calculate the coordinates 303 and 304 of respective centers of the nozzles 21 and 22, and causes the target coordinates extracting unit 714 to calculate the coordinates 305 and 306 of respective centers of the adjustment targets.

Following an instruction from the nozzle position adjustment amount calculation unit 713, the nozzle front end coordinates extracting unit 712 calculates the coordinates 303 and 304 of respective centers of the nozzles 21 and 22, from the images taken by the camera 202, and sends the calculated coordinates 303 and 304 back to the nozzle position adjustment amount calculation unit 713.

Following an instruction from the nozzle position adjustment amount calculation unit 713, the target coordinates extracting unit 714 calculates the coordinates 305 and 306 of respective centers of the adjustment targets, from the images taken by the camera 202, and sends the calculated coordinates 305 and 306 back to the nozzle position adjustment amount calculation unit 713. At calculation of the coordinates 305 and 306 of the centers of the adjustment targets, the target coordinates extracting unit 714 can perform pattern matching, using information on the adjustment targets that is stored in the adjustment target information saving unit 715.

The adjustment target information saving unit 715 stores information on the adjustment targets, e.g., their sizes and shapes, in advance.

The nozzle position adjustment amount calculation unit 713 receives the coordinates 303 and 304 of the centers of the nozzles 21 and 22 from the nozzle front end coordinates extracting unit 712, receives the coordinates 305 and 306 of the centers of the adjustment targets from the target coordinates extracting unit 714, and calculates an amount of adjustment of respective positions of the nozzles 21 and 22 (the coordinate differences 307 and 308 shown in FIG. 3D). The nozzle position adjustment amount calculation unit 713 sends an instruction to the nozzle position adjustment operation control unit 706, causing it to move the nozzles 21 and 22 by the calculated amount of adjustment to adjust the positions of the nozzles 21 and 22.

Based on the instruction from the nozzle position adjustment amount calculation unit 713, the nozzle position adjustment operation control unit 706 sends an instruction to the dispensing arm control unit 705 to drive the dispensing arm 201, thereby adjusting the positions of the nozzles 21 and 22.

Using the calculated amount of adjustment of the positions of the nozzles 21 and 22, the nozzle position adjustment amount calculation unit 713 updates stop positions (the suction position, the delivery position, and the cleaning position) of the nozzles 21 and 22, and stores the updated stop positions in the stop position table 709.

When a plurality of imaging positions 407 and of imaging positions 412 are set at the dispensing mechanisms 14 and 15, respectively, the nozzle position adjustment operation control unit 706 can send an instruction to the dispensing arm control unit 705, the instruction causing the dispensing arm control unit 705 to select imaging positions 407 and 412 at which fewer stains and obstacles are detected. When the position of the front end of the nozzle 21 (nozzle 22) cannot be detected from an image of the nozzle 21 (nozzle 22) that is taken at one imaging position 407 (imaging position 412), the nozzle position adjustment operation control unit 706 can send an instruction to the dispensing arm control unit 705, the instruction causing the dispensing arm control unit 705 to switch from the one imaging position 407 (imaging position 412) to a different imaging position 407 (imaging position 412) and take an image at the different imaging position 407 (imaging position 412).

The automated analyzer 10 according to this embodiment has the configuration described above, and can highly accurately detect the positions of the front ends of the reagent nozzle 21 and the sample nozzle 22. The automated analyzer 10 according to this embodiment, therefore, can accurately adjust the positions of the reagent nozzle 21 and the sample nozzle 22 and, when carrying out the analysis process, can highly accurately align the positions of the reagent nozzle 21 and sample nozzle 22 with the position of the adjustment targets, respectively.

It should be noted that the present invention is not limited to the above embodiment and can be implemented as various modifications. For example, the above embodiment has been described in detail for easy understanding of the present invention, and the present invention is not necessarily limited to a mode that includes all constituent elements described above. Some constituent elements of a certain embodiment may be replaced with constituent elements of another embodiment. A constituent element of another embodiment may be added to a constituent element of a certain embodiment. In addition, some of constituent elements of each embodiment may be deleted therefrom or have other constituent elements added thereto or be replaced with other constituent elements.

### Reference Signs List

- 10: automated analyzer
- 11: reagent container
- 12: reagent disc
- 13: reaction disc
- 14: reagent dispensing mechanism
- 15: sample dispensing mechanism
- 21: reagent nozzle
- 22: sample nozzle
- 23: sample tube
- 24: sample rack
- 25: reaction cell
- 26: reagent cleaning tank
- 27: sample cleaning tank
- 101: transfer line
- 201: dispensing arm
- 202: camera
- 203a: image acquiring unit
- 203b: image acquiring unit
- 204: connection portion
- 205: imaging range
- 301: cleaning hole
- 302: edge of front end of nozzle
- 303: X coordinate of center of nozzle
- 304: Y coordinate of center of nozzle
- 305: X coordinate of center of cleaning hole
- 306: Y coordinate of center of cleaning hole
- 307: X coordinate difference
- 308: Y coordinate difference
- 401: track of center of reaction cell
- 402: track of center of hole of lid of reagent container
- 403: track of center of sample tube
- 404: reagent suction position
- 405: reagent dispensing position
- 406: reagent nozzle cleaning position
- 407: imaging position of reagent nozzle
- 408: range in which reagent nozzle is allowed to move
- 409: sample suction position
- 410: sample delivery position
- 411: sample nozzle cleaning position
- 412: imaging position of the sample nozzle
- 413: track of the sample nozzle
- 501: base
- 502: cover
- 503: passage hole
- 701: dispensing mechanism control unit
- 702: GUI
- 703: mode switching unit
- 704: analysis operation control unit
- 705: dispensing arm control unit
- 706: nozzle position adjustment operation control unit
- 707: dispensing arm horizontal drive unit
- 708: dispensing arm vertical drive unit
- 709: stop position table
- 710: imaging control unit
- 711: image data saving unit
- 712: nozzle front end coordinates extracting unit
- 713: nozzle position adjustment amount calculation unit
- 714: target coordinates extracting unit
- 715: adjustment target information saving unit

## Claims

1. An automated analyzer comprising:
a dispensing mechanism (14, 15) including a nozzle (21, 22) that dispenses a reagent or a specimen and a dispensing arm (201) that moves the nozzle (21, 22);
a cleaning tank (26, 27) for cleaning the nozzle (21, 22); and
an automated analyzer control unit that adjusts a position of the nozzle (21, 22),
wherein the automated analyzer executes an analysis process of analyzing a mixed liquid of the reagent and the specimen, the mixed liquid being held in a reaction cell,
at the dispensing mechanism (14, 15), a stop position of the nozzle (21, 22) is set, the stop position being a position at which the nozzle (21, 22) stops moving in the analysis process,
the dispensing mechanism (14, 15) includes an imaging device (202) disposed on the dispensing arm (201),
at the dispensing mechanism (14, 15), at least one position at which an image of the nozzle (21, 22) is taken is set as predetermined one or plural imaging positions (407, 412),
wherein the automated analyzer control unit moves the nozzle (21, 22) to the one or plural imaging positions (407, 412) of the nozzle (21, 22), and takes the image of the nozzle (21, 22), using the imaging device (202), at the imaging position (407, 412), and
the imaging position (407, 412) is a position to which the nozzle (21, 22) is allowed to move and is a position different from the stop position, wherein
the stop position includes a suction position at which the nozzle (21, 22) sucks the reagent or the specimen from a container holding the reagent or the specimen, a delivery position at which the nozzle (21, 22) delivers the reagent or the specimen to the reaction cell, and a cleaning position at which the nozzle (21, 22) is cleaned and wherein when taking an image of the cleaning tank (26, 27), the container, or the reaction cell as an imaging target, using the imaging device (202),
**characterized in that** the automated analyzer control unit takes an image of the imaging target at a position at which the nozzle (21, 22) and the imaging target do not overlap in a taken image of the imaging target.

2. The automated analyzer according to claim 1, wherein
the imaging position (407, 412) is a position at which a background of a front end of the nozzle (21, 22) is a blank background in an image of the nozzle (21, 22) that is taken by the imaging device (202).

3. The automated analyzer according to claim 1, wherein
when taking an image of the imaging target, using the imaging device (202), the automated analyzer control unit moves the nozzle (21, 22) from the imaging position (407, 412) to the position at which the nozzle (21, 22) and the imaging target do not overlap, at a speed lower than a speed of moving the nozzle (21, 22) in the analysis process.

4. The automated analyzer according to claim 1, comprising a cover that covers at least one of the cleaning tank (26, 27), the container, and the reaction cell,
wherein the imaging position (407, 412) is covered with the cover when the automated analyzer carries out the analysis process.

5. The automated analyzer according to claim 1, comprising a cover that covers at least one of the cleaning tank (26, 27), the container, and the reaction cell,
wherein the imaging position (407, 412) is on the cover.

6. The automated analyzer according to claim 1, wherein
a plurality of the imaging positions (407, 412) are set, and
when a position of a front end of the nozzle (21, 22) cannot be detected from an image of the nozzle (21, 22) that is taken at one imaging position (407, 412) of the plurality of imaging positions (407, 412), the automated analyzer control unit takes an image of the nozzle (21, 22) at a different imaging position (407, 412) of the plurality of imaging positions (407, 412).

## Patentansprüche

1. Automatisierter Analysator, der umfasst:
einen Ausgabemechanismus (14, 15), der eine Düse (21, 22), die ein Reagenz oder eine Probe ausgibt, und einen Ausgabearm (201), der die Düse (21, 22) bewegt, enthält;
einen Reinigungstank (26, 27) zum Reinigen der Düse (21, 22); und
eine Steuereinheit für einen automatisierten Analysator, die eine Position der Düse (21, 22) anpasst,
wobei der automatisierte Analysator einen Analysevorgang des Analysierens einer gemischten Flüssigkeit des Reagenz und der Probe ausführt, wobei die gemischte Flüssigkeit in einer Reaktionszelle gehalten wird,
an dem Ausgabemechanismus (14, 15) eine Anhalteposition der Düse (21, 22) eingestellt wird, wobei die Anhalteposition eine Position ist, an der die Bewegung der Düse (21, 22) in dem Analysevorgang angehalten wird,
der Ausgabemechanismus (14, 15) eine Bildgebungsvorrichtung (202) enthält, die auf dem Ausgabearm (201) angeordnet ist,
an dem Ausgabemechanismus (14, 15) mindestens eine Position, an der ein Bild der Düse (21, 22) aufgenommen wird, als eine oder mehrere vorgegebene Bildgebungspositionen (407, 412) eingestellt werden,
wobei die Steuereinheit für einen automatisierten Analysator die Düse (21, 22) zu der einen oder den mehreren Bildgebungspositionen (407, 412) der Düse (21, 22) bewegt und das Bild der Düse (21, 22) unter Verwendung der Bildgebungsvorrichtung (202) an der Bildgebungsposition (407, 412) aufnimmt und
die Bildgebungsposition (407, 412) eine Position ist, zu der sich die Düse (21, 22) bewegen darf, und eine Position ist, die von der Anhalteposition verschieden ist, wobei
die Anhalteposition eine Ansaugposition, an der die Düse (21, 22) das Reagenz oder die Probe von einem Behälter, der das Reagenz oder die Probe enthält, ansaugt, eine Lieferposition, an der die Düse (21, 22) das Reagenz oder die Probe an die Reaktionszelle liefert, und eine Reinigungsposition, an der die Düse (21, 22) gereinigt wird, enthält und wobei dann, wenn ein Bild des Reinigungstanks (26, 27), des Behälters oder der Reaktionszelle als ein Bildgebungsziel unter Verwendung der Bildgebungsvorrichtung (202) aufgenommen wird,
**dadurch gekennzeichnet, dass** die Steuereinheit für einen automatisierten Analysator ein Bild des Bildgebungsziels an einer Position aufnimmt, an der die Düse (21, 22) und das Bildgebungsziel in einem aufgenommenen Bild des Bildgebungsziels nicht überlappen.

2. Automatisierter Analysator nach Anspruch 1, wobei
die Bildgebungsposition (407, 412) eine Position ist, an der ein Hintergrund eines vorderen Endes der Düse (21, 22) ein leerer Hintergrund in einem Bild der Düse (21, 22) ist, das durch die Bildgebungsvorrichtung (202) aufgenommen wird.

3. Automatisierter Analysator nach Anspruch 1, wobei
dann, wenn ein Bild des Bildgebungsziels unter Verwendung der Bildgebungsvorrichtung (202) aufgenommen wird, die Steuereinheit für einen automatisierten Analysator die Düse (21, 22) von der Bildgebungsposition (407, 412) zu der Position, an der die Düse (21, 22) und das Bildgebungsziel nicht überlappen, mit einer Geschwindigkeit, die niedriger als eine Geschwindigkeit des Bewegens der Düse (21, 22) in dem Analysevorgang ist, bewegt.

4. Automatisierter Analysator nach Anspruch 1, der eine Abdeckung umfasst, die den Reinigungstank (26, 27) und/oder den Behälter und/oder die Reaktionszelle bedeckt,
wobei die Bildgebungsposition (407, 412) mit der Abdeckung bedeckt wird, wenn der automatisierte Analysator den Analysevorgang ausführt.

5. Automatisierter Analysator nach Anspruch 1, der eine Abdeckung umfasst, die den Reinigungstank (26, 27) und/oder den Behälter und/oder die Reaktionszelle bedeckt,
wobei sich die Bildgebungsposition (407, 412) auf der Abdeckung befindet.

6. Automatisierter Analysator nach Anspruch 1, wobei
mehrere der Bildgebungspositionen (407, 412) eingestellt werden und
dann, wenn eine Position eines vorderen Endes der Düse (21, 22) nicht von einem Bild der Düse (21, 22) detektiert werden kann, das an einer Bildgebungsposition (407, 412) der mehreren Bildgebungspositionen (407, 412) aufgenommen wird, die Steuereinheit für einen automatisierten Analysator ein Bild der Düse (21, 22) an verschiedenen Bildgebungspositionen (407, 412) der mehreren Bildgebungspositionen (407, 412) aufnimmt.

## Revendications

1. Analyseur automatisé comprenant :
un mécanisme de distribution (14, 15) incluant une buse (21, 22) qui distribue un réactif ou un prélèvement, et un bras de distribution (201) qui déplace la buse (21, 22) ;
un réservoir de nettoyage (26, 27) destiné à nettoyer la buse (21, 22) ; et
une unité de commande d'analyseur automatisé qui ajuste une position de la buse (21, 22),
dans lequel l'analyseur automatisé exécute un processus d'analyse consistant à analyser un liquide mélangé du réactif et du prélèvement, le liquide mélangé étant contenu dans une cellule de réaction,
au niveau du mécanisme de distribution (14, 15), une position d'arrêt de la buse (21, 22) est définie, la position d'arrêt étant une position à laquelle la buse (21, 22) arrête de se déplacer dans le processus d'analyse,
le mécanisme de distribution (14, 15) inclut un dispositif d'imagerie (202) disposé sur le bras de distribution (201),
au niveau du mécanisme de distribution (14, 15), au moins une position à laquelle est prise une image de la buse (21, 22) est définie à titre d'une ou de plusieurs positions d'imagerie prédéterminées (407, 412),
dans lequel l'unité de commande d*analyseur automatisé déplace la buse (21, 22) jusqu'à ladite une ou plusieurs positions d'imagerie (407, 412) de la buse (21, 22), et prend l'image de la buse (21, 22), à l'aide du dispositif d'imagerie (202), à la position d'imagerie (407, 412), et
la position d'imagerie (407, 412) est une position à laquelle la buse (21, 22) est autorisée à se déplacer et est une position différente de la position d'arrêt, dans lequel
la position d'arrêt inclut une position d'aspiration à laquelle la buse (21, 22) aspire le réactif ou le prélèvement à partir d'un contenant qui contient le réactif ou le prélèvement, une position de distribution à laquelle la buse (21, 22) distribue le réactif ou le prélèvement à la cellule de réaction, et une position de nettoyage à laquelle la buse (21, 22) est nettoyée, et dans lequel, quand une image du réservoir de nettoyage (26, 27) est prise, le contenant, ou la cellule de réaction à titre de cible d'imagerie, utilise le dispositif d'imagerie (202),
**caractérisé en ce que** l'unité de commande d'analyseur automatisé prend une image de la cible d'imagerie à une position à laquelle la buse (21, 22) et la cible d'imagerie ne se chevauchent pas dans une image prise de la cible d'imagerie.

2. Analyseur automatisé selon la revendication 1, dans lequel
la position d'imagerie (407, 412) est une position à laquelle un arrière-plan d'une extrémité avant de la buse (21, 22) est un arrière-plan vierge dans une image de la buse (21, 22) qui est prise par le dispositif d'imagerie (202).

3. Analyseur automatisé selon la revendication 1, dans lequel
quand une image de la cible d'imagerie est prise, à l'aide du dispositif d'imagerie (202), l'unité de commande d'analyseur automatisé déplace la buse (21, 22) depuis la position d'imagerie (407, 412) jusqu'à la position à laquelle la buse (21, 22) et la cible d'imagerie ne se chevauchent pas, à une vitesse inférieure à une vitesse de déplacement de la buse (21, 22) dans le processus d'analyse.

4. Analyseur automatisé selon la revendication 1, comprenant une couverture qui recouvre au moins un élément parmi le réservoir de nettoyage (26, 27), le contenant, et la cellule de réaction,
dans lequel la position d'imagerie (407, 412) est recouverte avec la couverture quand l'analyseur automatisé exécute le processus d'analyse.

5. Analyseur automatisé selon la revendication 1, comprenant une couverture qui recouvre au moins un élément parmi le réservoir de nettoyage (26, 27), le contenant, et la cellule de réaction,
dans lequel la position d'imagerie (407, 412) est sur la couverture.

6. Analyseur automatisé selon la revendication 1, dans lequel
une pluralité de positions d'imagerie (407, 412) sont définies, et
quand une position d'une extrémité avant de la buse (21, 22) ne peut pas être détectée à partir d'une image de la buse (21, 22) qui est prise à une position d'imagerie (407, 412) de la pluralité de positions d'imagerie (407, 412), l'unité de commande d'analyseur automatisé prend une image de la buse (21, 22) à une position d'imagerie différente (407, 412) de la pluralité de positions d'imagerie (407, 412).
